# EUROPEAN PATENT SPECIFICATION

(11) **EP 3 306 543 B1**
(45) Date of publication and mention of the grant of the patent: **20.11.2024**
(21) Application number: 17194479.6
(22) Date of filing: 02.10.2017
(51) Int. Cl.: G06Q 10/10

(54) **MEAL PREPARATION ORCHESTRATOR**
ORCHESTRATOR FÜR DIE ZUBEREITUNG VON MAHLZEITEN
ORCHESTRATEUR DE PREPARATION DE REPAS

(30) Priority: 07.10.2016 SE 1600281
(43) Date of publication of application: 11.04.2018
(73) Proprietor: Thysell, Michael, 14160 Huddinge (SE)
(72) Inventor: Thysell, Michael, 14160 Huddinge (SE)

(56) References cited:
- US-B1- 8 990 274
- No relevant documents disclosed

## Description

### TECHNICAL FIELD

Implementations described herein generally relate to a control unit and a method according to the appended claims. More particularly, a method and a control unit are described, for assisting a user in orchestrating preparation of a meal comprising a plurality of dishes, based on recipes stored in a database on a common recipe format, by independent recipe authors.

### BACKGROUND

Recipes for various dishes may be available on an electronic format, e.g. accessible via internet or an app and typically provide information concerning which ingredients to utilise, which quantities to apply, and instructions concerning the dish preparation.

However, these recipes on the electronic format have not evolved much beyond the classical concept of recipes provided in paper format, i.e. the user has to read a lot of text in order to utilise the recipe and understand which utensils and ingredients to use, and the preparation order of the various moments and the possible advantages of digital recipes are yet not exploited fully.

Further, when preparing a meal, typically a plurality of dishes has to be cooked and thus also a plurality of recipes has to be used simultaneously. However, there is in general no advice provided to the user, how to combine the different work moments of the different recipes in order to get the different dishes ready at the same time and/ or in the shortest possible time, except possibly in the very specific case when one chef/ author has written a specific recipe including several dishes to be composed into one meal without possibility for the user to alter any of the dishes due to personal taste, allergy or similar.

Thus, there may exist recipes for complete meals wherein the preparation order is set and organised by the chef/ author, but in case the user would like to compose a meal out of dishes/ recipes written by distinct authors, the user has to figure out him/ herself in which order to make the different method steps of the respective recipes in order to be ready at dinner time and/ or as quickly as possible.

Normally, there is no possibility for the chef/ author of a recipe to specify how long time the dish may be made in advance before deteriorating, other than plain text within the recipe. When preparing a plurality of dishes for a meal, it may often be necessary, in particular when two or more dishes require the same resource and/ or the user's complete attention, to prepare the dishes sequentially and the inexperienced user may not know which dish to start prepare and then leave to rest while preparing the other dishAes; and for how long time it may rest before deteriorating.

The user, although possibly inexperienced in cooking and/ or having problems reading recipes may yet have developed a progressive or unconventional taste; and/ or have an opened and experimental mindset and for example be willing to exchange the customary boiled potatoes of a Scandinavian meal such as meatballs with lingonberry jam, with an exotic vegetable such as e.g. cooking plantain, yams and/ or cassava. It is then far from obvious for the typical user how to prepare the exotic vegetable, how to organise various cocking moments of the vegetable in combination with the preparation of the meatballs and/ or how long time in advance the dish may be cooked/ kept warm before losing its freshness, for example. It is also a very small probability that the user finds a readymade meal preparation made by a chef! author in this kind of daring food combinations.

The user may further be interested in preparing a certain set of dishes when inviting his/ her friends; however due to various allergies, diets, phobias, etc. among the guests, he/ she may have to prepare alternative replacement dishes comprising edibles with which he/ she is not very accustomed. Further, the thereby increased number of dishes creates increased problems for the user concerning how to organise the food preparation, in which order to perform the various steps of the respective recipes; and to determine how to handle conflicts in resource utilisation when preparing different dishes; several dishes may require preparation in the oven at different temperatures and length, for example.

In case the user makes a search for recipes on the internet, or a particular recipe provider via internet, in order to discover and combine different recipes into a meal, the user most likely will be obliged to read a substantial amount of texts and him/ herself combine the various recipe steps into a working list; which is problematic not only for the dyslectic user (often estimated to about 5-8% of the Swedish population); the reader with reading disability (the reading ability of Swedish students is considerably lower than the OECD average, according to the PISA study 2012), see https://sv.wikipedia.org/wiki/Pisa_(utbildningsstudie); or people with age-related alteration of the eye lens, who are required to firstly retrieve their reading glasses before preparing any action; but most likely for any user as cooking typically involve wet/ sticky fingers, which combines badly with a computer/ touchscreen communication interface and the requirement of text scrolling and recipe swapping.

Document US8990274B1 discloses a system and computer implemented method for presenting a set of instructions for generating a recipe presentation.

It would be desired to provide the inexperienced kitchen user with a tool, enabling him/ her to prepare a time planned meal with a flexibility to use recipes of choice beyond what is currently found in plain text recipes or today available tools on the market.

### SUMMARY

It is therefore an object to obviate at least some of the above mentioned disadvantages and to provide assistance to a user when preparing a meal.

This and other objects are achieved by the features of the appended independent claims. Further implementation forms are apparent from the dependent claims, the description and the figures.

According to a first aspect, a control unit is provided. The control unit aims at assisting a user in orchestrating preparation of a meal comprising a plurality of dishes, based on recipes stored in a database on a common recipe format, by independent recipe authors. The control unit is configured to offer a plurality of dishes to the user via a communication device, where each dish corresponds to a respective recipe in the database. Further, the control unit is configured to receive a selection of dishes forming the meal, selected by the user, via a communication interface. The control unit is in addition configured to determine a required work intensity of the user, selected from at least three distinct work intensity levels, for each cooking step in a respective recipe associated with the received dish selection, based on information provided by the recipe author. The control unit is also configured to determine a maximum time limit, and a minimum time limit, of each step of the respective recipe, based on information provided by the recipe author. Furthermore, the control unit is additionally configured to compose a time interval structure of the steps of the respective recipe, based on the determined required work intensity of the user for each step and the determined maximum and minimum time limits, respectively, of each step. The control unit is configured to receive at least one input value, either from a sensor situated in a kitchen resource or from the communication device of the user, and to adapt the time interval structure of the recipe steps with regard to the received input value. Also, the control unit is configured to generate and transmit control signals to the communication device of the user, or to a kitchen appliance of the user for outputting the adapted time interval structure on the communication device or on the kitchen appliance; and as an output, control the action of the kitchen appliance of the user, based on information received from the user concerning when the meal is to be ready and further based on sensor values detected by the sensor.

According to a second aspect, a method in a control unit is provided. The method aims at assisting a user in orchestrating preparation of a meal comprising a plurality of dishes, based on recipes stored in a database on a common recipe format, by independent recipe authors. The method comprises offering a plurality of dishes to the user via a communication device, where each dish corresponds to a respective recipe in the database. Further, the method also comprises receiving a selection of dishes forming the meal, selected by the user. The method additionally comprises determining a required work intensity of the user, selected from at least three distinct work intensity levels, for each step in a respective recipe associated with the received dish selection, based on information provided by the recipe author. Furthermore, the method comprises determining a maximum time limit, and a minimum time limit, of each step of the respective recipe, based on information provided by the recipe author. In further addition the method also comprises composing a time interval structure of the various steps of the respective recipes, based on the determined required work intensity of the user for each step and the determined maximum time and minimum time limits, respectively, of each step. The method comprises receiving at least one input value, either from a sensor situated in a kitchen resource, or from the communication device of the user. The method also comprises adapting the time interval structure of the recipe steps with regard to the received input value. Additionally, the method comprises generating and transmitting control signals to the communication device, or to a kitchen appliance of the user, for outputting the adapted time interval structure on the communication device or on the kitchen appliance. The method furthermore comprises outputting control of the kitchen appliance of the user, based on information received from the user concerning when the meal is to be ready and further based on sensor values detected by the sensor.

By using a common recipe format for all recipes which are uploaded and stored on the database, a platform is provided for offering the user a variety of dishes, which may be provided by different recipe authors; which dishes may be combined into a meal, as selected by the user. As the common recipe format requires certain parameters which the recipe author has to specify, such as required work intensity of the user and a completion time interval for each step in the respective recipe, the control unit is enabled to combine the various recipes of distinct dishes into a time interval structure, for assisting and coaching the user when preparing the meal. By preparing the time interval structure of the steps based on the required work intensity of the user and the maximum time limit of each recipe step, it becomes possible for the control unit to optimise the total cooking time and also prepare the meal without any edible becoming deteriorated at the moment of the meal.

In some embodiments, input values may be collected by the control unit, where after the time interval structure of the recipe steps may be adapted to received input values continuously. The time interval structure may thereby be adapted due to various unexpected events occurring the user during the cooking process, such as received phone calls and various other interruptions.

Thanks to the provided solution, it becomes possible also for the inexperienced user to compose a complex meal comprising various dishes from distinct recipe authors, also when made with edibles from which the user has none or negligible previous cooking experience. Thereby a tool is provided for the inexperienced user to prepare a meal to a predetermined serving time using an arbitrary selection of recipes.

Other objects, advantages and novel features of the described aspects will become apparent from the following detailed description.

### BRIEF DESCRIPTION OF THE DRAWINGS

Various embodiments are described in more detail with reference to attached drawings, illustrating examples in which:
- **Figure 1A**: is a block diagram illustrating a system according to an embodiment of the invention.
- **Figure 1B**: is a block diagram illustrating a system according to an embodiment of the invention.
- **Figure 1C**: is a block diagram illustrating a system according to an embodiment of the invention.
- **Figure 2**: is a block diagram illustrating merging of two recipes into a time interval struc-ture of recipe steps.
- **Figure 3**: illustrates an embodiment wherein a sensor is measuring a parameter and interacts with the time interval structure of the user.
- **Figure 4**: is a flow chart illustrating a method according to an embodiment.
- **Figure 5**: is a control unit according to an embodiment.

### DETAILED DESCRIPTION

Embodiments of the invention described herein are defined as a control unit and a method, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

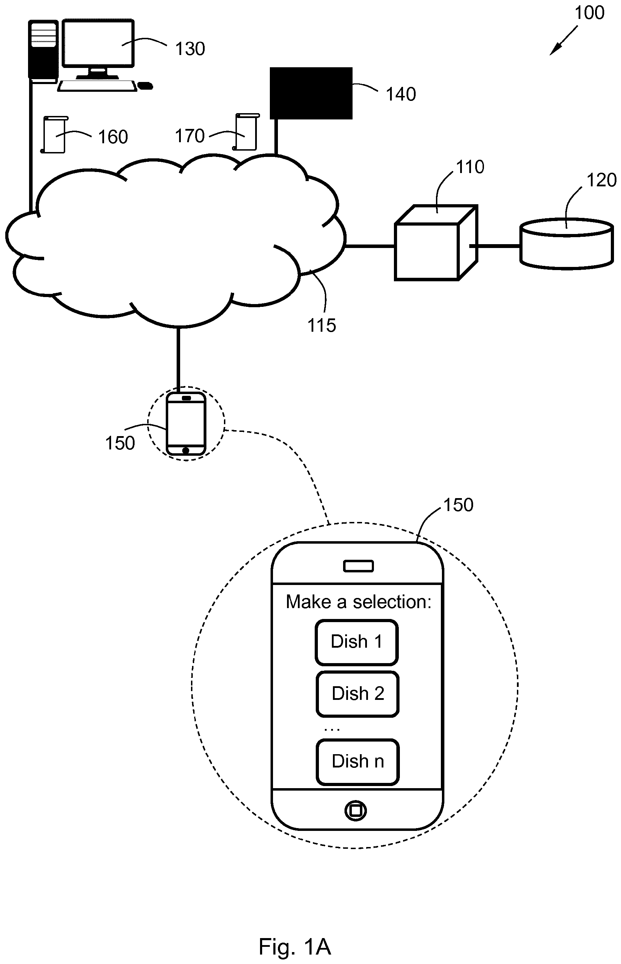

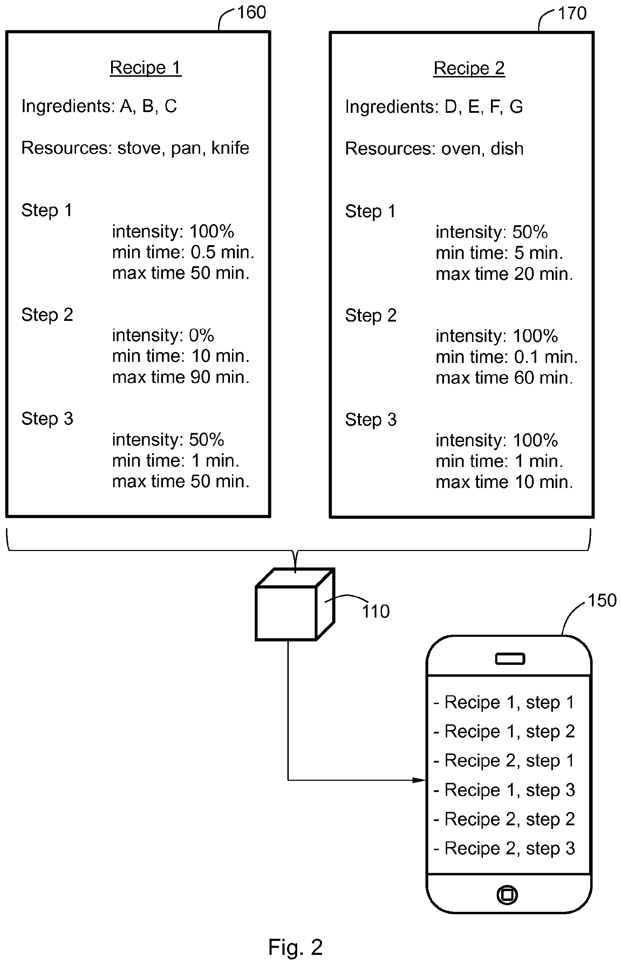

**Figure 1A** is a schematic illustration over a system 100. The system 100 comprises a control unit 110 for assisting a user in orchestrating preparation of a meal comprising a plurality of dishes. The control unit 110 is connected to a database **120,** wherein recipes **160, 170** of dishes may be stored. These recipes 160, 170 may be uploaded to the database 120 over a communication network **115** by various independent recipe authors **130, 140.** This is possible due to provision of a common recipe format, as will be further discussed in conjunction with presentation of **Figure 2****.** The database 120 may store a large number of recipes 160, 170.

As utilised herein; a recipe 160, 170 comprises instructions how to complete one dish, which consists of one or several work steps in a given work order. A dish is a part of a meal, which dish is corresponding to one recipe 160, 170. A meal is a combination of one or several dishes forming the meal. A work step, or recipe step, is an instruction for completing a discrete part of a recipe 160, 170. Work order is the order in time in which the work steps are to be completed to successfully cook the recipe 160, 170. A time interval is the determined time period for completing each work step where the minimum time limit is given to complete the step and the maximum time limit is given to prevent that the involved edibles become deteriorated. A time interval structure is the combination of time intervals from several recipes 160, 170 that are to be prepared simultaneously. The common recipe format of the recipes 160, 170, is the format in which each work step is described with respect to time, resource and work intensity in such a way that the completion time for each work step may be altered within a given time interval to optimise the total cooking effort when preparing a meal consisting of several dishes that are to be prepared simultaneously to form a complete meal served at a predetermined time.

A user may via a communication device 150 access the recipes 160, 170 in the database 120 over the communication network 115, e.g. presented on a web page or any other similar communication interface. The communication may be wired or wireless in different embodiments.

The user may be presented various dishes, for example by presenting images on the web page. In some embodiments, recipes 160, 170 may be searched for in the database 120 on a search engine. Further, recipes 160, 170 may be searched for on the database 120 e.g. by entering desired ingredients, a particular diet or allergy, etc., in some embodiments. Thereby, the user is enabled to select dishes to be combined to a meal.

The communication network 115 may comprise a collection of terminal nodes and/ or networks, connected wired or wirelessly, so as to enable telecommunication between the terminals. The communication network 115 may thus comprise a computer network or an internet network.

The control unit 110 may in some embodiments be a server, configured to communicate with the communication device 150, e.g. over the communication network 115. The control unit 110 may also in parallel communicate with a plurality of communication devices 150, depending on capacity of the control unit 110.

However, the control unit 110 may in some embodiments not be connected to the communication network 115, or at least not continuously connected to the communication network 115. In such embodiments, the communication device 150 may be connected to the control unit 110, e.g. via a wired connection or via a short range wireless communication such as e.g. Bluetooth, Near Field Communication (NFC), Radio-Frequency Identification (RFID), Z-wave, ZigBee, IPv6 over Low power Wireless Personal Area Networks (6LoWPAN), Wireless Highway Addressable Remote Transducer (HART) Protocol, Wireless Universal Serial Bus (USB), optical communication such as Infrared Data Association (IrDA) or infrared transmission, etc.

In some further embodiments, the control unit 110 may be integrated in the communication device 150 of the user. In those embodiments, the control unit 110 may uniquely support the particular user of the communication device 150 in food preparation. Thus the control unit 110 may be a software or an app, which may be downloaded into the communication device 150, when a connection over the communication network 115 is at least temporarily available and thereafter operate independently of any network connection.

The communication device 150 of the user in this illustrated embodiment may be represented by a mobile station also known as a mobile device, wireless terminal, mobile telephone, cellular telephone, etc.; a computer tablet, a laptop, a stationary computer, an augmented reality device, a pair of intelligent glasses or lenses, an intelligent watch, a 3D projection device, etc. In some alternative embodiments, the communication device 150 of the user may be integrated into a domestic appliance of the user's kitchen such as a refrigerator, freezer, stove, dishwasher, etc.

The following embodiment concerning augmented reality is not required for exercising the invention and is present herein for illustration purpose only.

Augmented reality is a live direct or indirect view of a physical, real-world environment whose elements are augmented (or supplemented) by computer-generated sensory input such as sound, video or graphics. It is related to a more general concept called mediated reality, in which a view of reality is modified (possibly even diminished rather than augmented) by a computer. As a result, the technology functions by enhancing one's current perception of the reality.

With the help of advanced augmented reality technology (e.g. adding computer vision and object recognition) the information about the surrounding real world of the user becomes visible and possibly interactive. Information about the environment and its objects is overlaid on the real world. This information can be virtual or real, e.g. seeing other real sensed or measured information such as temperature/ electromagnetic radio waves overlaid in exact alignment with where they actually are in the kitchen environment, such as the oven, stove, etc.

The communication device 150 is configured for communication over the communication network 115.

The communication device 150 may be configured to receive input from the user via a keyboard, via a touchscreen, via detection of user movements, i.e. a touch-free communication interface, detection and interpretation of voice commands, or similar device for human computer interaction.

Some examples of such touch-free communication interface may be based on e.g. image recognition or gesture recognition of images captured by a camera comprised in the user's communication device 150, in some embodiments. In some other embodiments, eye tracking of either the user's point of gaze (where one is looking) or the motion of an eye relative to the head, may be applied.

In some embodiments, a camera and/ or movement sensors integrated with the user's communication device 150, may detect movements of the user in order to enable touch free command input. Voice recognition is another option according to some embodiments.

An obvious advantage with interaction via a touch-free communication interface is that the user can scroll in the text, swap between different recipes 160, 170 etc., also when his/ her hands are messy. Further, the keyboard/ touchscreen of a typical communication device 150 may not be regularly cleaned and therefore comprise germs and bacteria. By avoiding that the user has to physically touch any keyboard/ touchscreen of the communication device 150, it is avoided that bacteria/ germs are spread from the communication interface and into the food, which may reduce the risk of food poisoning for the user and his/ her meal guests, if any.

The communication device 150 may output information to the user via presentation of text and/ or images on a display, sound emitted via loudspeakers, tactile signals emitted by a haptic device integrated in the communication device 150, projection of images, etc.

In some embodiments, the communication device 150 may project a movie and/ or an image such as e.g. a 3D image on a wall, fridge or any other similar surface. In some embodiments, a hologram may be created and projected. The movie/ image may be outputted by the communication device 150 upon request of the user, or alternatively delivered on command from the control unit 110 when a relevant recipe step is performed.

In some additional embodiments, the communication device 150 may comprise an augmented reality device which may output various advices and information related to the current recipe step, on command from the control unit 110.

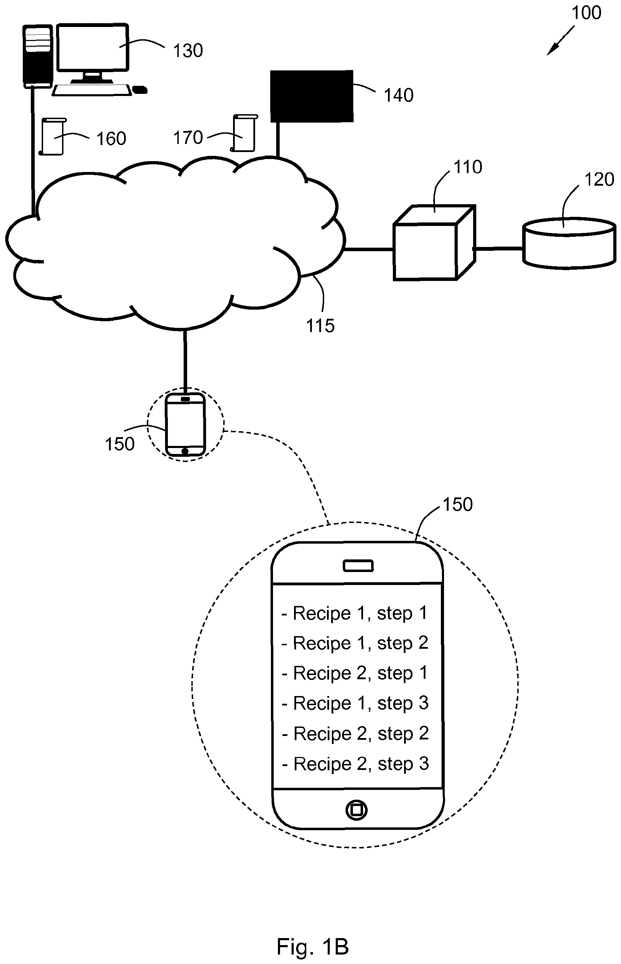

**Figure 1B** is a schematic illustration over the system 100 illustrated in Figure 1A, but at a later moment in time where the user has already made a selection of dishes. This selection of dishes is provided to the control unit 110 over the communication network 115.

The control unit 110 may then retrieve a respective recipe 160, 170, associated with the selected dishes from the database 120. A time interval structure of recipe steps, such as e.g. a working list to be used by the user is then prepared by the control unit 110, specifying in which order to perform the different steps of the respective recipes 160, 170, and/ or the respective completion time of each recipe step. The composition of the time interval structure/ work list may be made by the control unit 110 in order to minimise the cooking time, to avoid that food deteriorate by having to wait too long, and also for the dishes to be ready for the meal to be served at approximately the same time.

The control unit 110 may compose the work list based on required work intensity of the user.

Some recipe steps may for example not require any attention at all until the step is about to be ready, but still take some time, such as e.g. defrosting a frozen fish or boiling potatoes. The user may then start performing another recipe step of the other recipe 160, 170 in parallel, while the fish is defrosting/ the potatoes are boiling. Further, some recipe steps may require some surveillance by the user, such as frying sausages in a pan. However, this may not stop the user from being able to simultaneously perform another recipe step, e.g. of another recipe 160, 170. There may also be recipe steps which require the full attention of the user, such as for example the mixing of mayonnaise, where inattention of the user is likely to result in wasted ingredients. It is then inappropriate to incite the user to do another recipe step at the same time.

Further, the control unit 110 may compose the work list by determining which resources are required during each recipe step of the respective recipe 160, 170, and prevent any possible clash in required resources by different recipe steps.

Thereby, upon receiving the work list from the control unit 110, the user may start preparing the meal step by step by just following the provided work list.

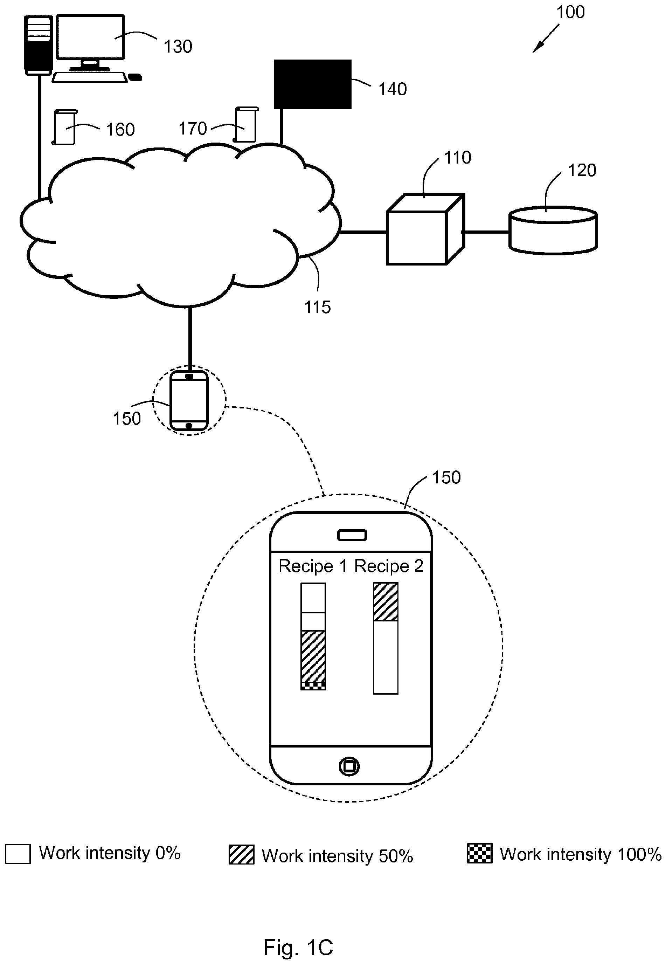

**Figure 1C** is a schematic illustration over the system 100 illustrated in Figure 1A, but at a later moment in time, alternative to the illustration in Figure 1B. The user has made a selection of dishes for a meal. This selection of dishes is provided to the control unit 110 over the communication network 115.

The control unit 110 may retrieve a respective recipe 160, 170, associated with the selected dishes from the database 120. A time interval structure wherein the user's work of the selected recipes 160, 170 is then planned and provided to the user's communication device 150, based on the required work intensity of each recipe step of the respective recipe 160, 170, and the maximum time limit of each recipe step. In the illustrated arbitrary non-limiting example, the recipe steps are classified as having 0% intensity; 50% work intensity; or 100% work intensity. The time interval structure may be organised in order to avoid that the user exceeds 100% total work intensity at the same time by adjusting time intervals for the recipe steps, while at the same time avoiding that the maximum time limit for any step is exceeded for avoiding that any food deteriorate by having to wait too long.

**Figure 2** is a block diagram illustrating merging of two recipes 160, 170 into a time interval structure of recipe steps/ aggregated work list by the control unit 110, provided to the communication device 150 of the user. This is merely an arbitrary example; another number of recipes 160, 170 such as e.g. three, four, five, etc. may be combined for a meal in other embodiments.

The user may select dishes according to the procedure discussed and presented in Figure 1A.

A common recipe format is used for all recipes 160, 170 uploaded to and stored in the database 120. Different, independent recipe authors 130, 140, may be inclined to write their respective recipes 160, 170 in a different and personal style. It thereby becomes difficult or even impossible to combine recipes 160, 170 of different recipe authors 130, 140 into a common work list for preparing a meal. By using the common recipe format and only accept recipes 160, 170 written on the common recipe format, thereby forcing the recipe authors 130, 140 to use the common recipe format, it becomes possible to combine different recipes 160, 170 into a common work list for preparing a meal.

Thereby, a platform is provided where independent recipe authors 130, 140 may upload and store recipes on dishes, which then may be displayed and presented to users, thanks to the common recipe format.

The common recipe format may specify ingredients of the dish. Further the common recipe format may specify a sequence of recipe steps to be performed in order to prepare the dish. Required resources for each recipe step may be specified. It may thereby be avoided that two recipe steps requiring the same resources are scheduled in the common work list at the same time, in some embodiments.

Further the common recipe format may specify a required user intensity of each recipe step. This may be entered by the recipe author 130, 140 e.g. as percentages of the user's total amount of attention, in categories, such as "none", "only monitoring", and "full attention", as a colour code, as a chart, a diagram staple etc., in some non-limiting examples. It is thereby possible for the control unit 110 to determine how to compose the time interval structure of recipe steps/ aggregated work list of the user in an optimal way, so that recipe steps could overlap when none, or only a limited amount of attention is required for at least one of the recipe steps, also when belonging to different recipes 160, 170.

The common recipe format also specifies a maximum time limit for each recipe step of the recipes 160, 170. The maximum time limit may be the longest time period which the recipe step could be stalled without deterioration of the ingredients. The maximum time limit of the last recipe step of the recipe 160, 170 thus indicates how long time the prepared dish could rest before deterioration. The maximum time limit of a stew or pasta sauce may be several hours, or even days while the maximum time limit of pasta may be e.g. half an hour, just to mention some examples. By specifying the maximum time limit of each recipe step, the control unit 110 is enabled to plan and orchestrate the time interval structure, e.g. the order of the work list and time interval length of recipe steps, in order to avoid that any food becomes deteriorated due to having been putted on hold for too long time.

In some embodiments, the control unit 110 may measure and keep track of the working time of the user of each recipe step. In some embodiments, a warning may be generated and emitted by the control unit 110 to the user's communication device 150 when the maximum time limit of the particular recipe step is approached, reached or exceeded. Thereby, the user may be alerted when the maximum time limit of a particular recipe step is about to be exceeded and may take appropriate measures to avoid that food is deteriorated.

In some embodiments, an alert may be generated when the user has worked with a recipe step for e.g. 70% (in a non-limiting arbitrary example) of the maximum time, in order to give the user time to finish the critical recipe step. Such alert may be sent as output to the user's communication device 150 e.g., in form of a text message, a visual message, an audio message and/ or a tactile message in different embodiments.

The common recipe format also specifies a minimum time limit for each recipe step of the recipes 160, 170. The minimum time limit is the briefest possible time period on which the recipe step may be performed. The minimum time limit may for example be less than 1 minute in some embodiments. In other embodiments, for example when boiling pasta, the minimum time limit may be 10 minutes; i.e. it is required to cook pasta for ten minutes in order to be edible, in case the pasta is put into boiling water. The average cooking time will however be longer as it will take some time to boil the water. The minimum time limit of each respective recipe step may be used by the control unit 110 to plan the time interval structure, such as order and time interval length of the recipe steps on the aggregated work list.

It may be noted that the specified minimum time limit and maximum time limit, respectively, are not related to the actual performance time of the user for each recipe step. Instead the minimum/ maximum time limit is/ are related to the edible and possible deterioration thereof. It is thereby possible for the control unit 110 to compose the aggregated worklist of the user, focusing on the quality/ taste of the edible and the future dish rather than on the capacity of the user, which will result in a more palatable meal.

By forcing the recipe author 130, 140 to specify the work intensity and the maximum time limit of each recipe step, and also the minimum time limit of each recipe step and/ or the required resources during each recipe step, by the common recipe format, the control unit 110 is enabled to plan the order of the aggregated recipe steps and the completion time of each recipe step on the aggregated worklist in order to optimise the total preparation time of the meal. Optimise in the current sense means avoiding that any food deteriorates and enable serving of all dishes that are supposed to be eaten together in the meal at the same time.

The work intensity of each recipe step may be indicated to the user, e.g. by a graphic indication or a colour code; where e.g. green may indicate no attention required at all; yellow may indicate some monitoring of the preparation and red may indicate full attention from the user. The work intensity may alternatively be expressed as percentages of the user's total amount of attention, in categories, such as "none", "only monitoring", and "full attention", as a chart, a diagram staple etc., as previously mentioned, e.g. in Figure 1C. It thereby becomes easier for the user to understand the structure of the generated work list and plan the work. An advantage with graphical and/ or visual illustration of the work intensity, instead of text based presentation, is that the work intensity is immediately understood by the user, also when he/ she is illiterate, dyslectic, stressed or visually impaired.

Also, in some embodiments, the maximum time limit and/ or the minimum time limit of each recipe step may be indicated to the user, not in order to estimate the cooking time, but rather to warn the user that edibles may deteriorate when the maximum time limit for each step is exceeded. Alternatively, the edible may not be ready for consumption when the minimum time limit is not exceeded.

Furthermore, by indicating the required resources, the user knows what utensils are required so that he/ she can avoid dishes requiring utensils he/ she does not have access to. The user may also thereby be alerted for re-use of some resources. For example, in case the frying pan is used in two different recipe steps of two different recipes 160, 170, the user becomes aware that he/ she has to clean the frying pan between the steps or needs to use two frying pans.

In some embodiments, the time interval structure, or aggregated work list may be continuously monitored and updated by the control unit 110, e.g. in case the user is/ becomes delayed in a recipe step for various reasons. Thus the user in some embodiments may report the termination of each recipe step, and/ or the beginning of each recipe step. In other embodiments, the user may inform the control unit 110 concerning an occurred delay, e.g. due to a telephone call or another similar unexpected event. The control unit 110 may then rearrange the time interval structure in order to optimise the food cooking, i.e. avoid that any food deteriorates.

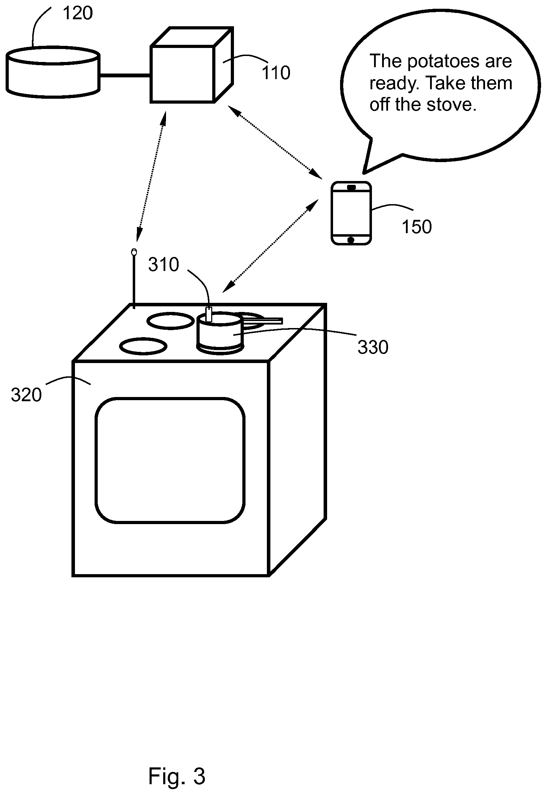

**Figure 3** illustrates an alternative embodiment wherein a sensor 310 is measuring a parameter and interacts with the time interval structure of recipe steps/ aggregated work list of the user, via the control unit 110 and/ or the user's communication unit 150.

In the illustrated example, the sensor 310 is measuring temperature of a content of a cookware 330, such as a pot, situated on a kitchen appliance 320, such as e.g. a stove. The sensor 310 may alternatively measure the inner temperature of an edible, such as a potato, in the cookware 330. In an illustrative but non-limiting example, the user may be boiling potatoes as a recipe step. The sensor 310 may measure either the temperature of the water in the pot 330, or the inner temperature of one of the potatoes, in some embodiments. These measurements may be performed by the sensor 310 continuously, or at predetermined or configurable time intervals. The made measurement values may then be provided via wired or wireless signals to the control unit 110, either directly via a cellular network, WiFi or the like, or indirectly via short range wireless communication such as Bluetooth, Ultra Mobile Broadband, Near Field Communication, Radio-Frequency Identification (RFID), Z-wave, ZigBee, IPv6 over Low power Wireless Personal Area Networks (6LoWPAN), Wireless Highway Addressable Remote Transducer (HART) Protocol, Wireless Universal Serial Bus (USB), or similar communication protocol to the communication device 150 of the user, which in turn may forward the made measurement value to the control unit 110.

In some embodiments, the temperature of the water in the pot 330 may be measured by the stove 320, i.e. the sensor 310 may be integrated in the stove 320, or other kitchen appliances.

The control unit 110, may then, upon receiving the sensor measurement values, determine when the cooking step is ready, either by comparing the inner temperature of the edible with a temperature interval associated with the edible, or by computing, based on the measurement values of the sensor 310 and knowledge about cooking time for the particular edible, when the edible may be expected to be ready. The cooking time of e.g. potatoes may be dependent on e.g. if they are put into cold water or boiling water. The cooking time may also be dependent on size of the potatoes, which possibly may be determined by another sensor value, such as e.g. an image taken by the user's communication device 150 in case a camera is comprised therein, or by another sensor 310 of the user, comprising a camera. Or a temperature gauge inserted in the middle of a representative potato in the boiling water. Performance capacity of the stove 320 will also influence the time required for heating a hotplate of the stove 320. Such information may be obtained by the control unit 110 directly from the stove 320 of the user, in some embodiments.

When the control unit 110 has estimated that the edible is ready, based e.g. on an input value from the sensor 310 (such as inner temperature of an edible), or a time measurement since cooking begun, an urging may be sent to the user, encouraging him/ her to discontinue the cooking/ check if the edible is ready, in some embodiments. Such encouragement may comprise e.g. a text message, a visual message, an audio message and/ or a tactile message outputted on the user's communication device 150. In other embodiments, the control unit 110 may generate and send a command to the stove 320 to discontinue the cooking when the edible is estimated to be ready, based on the sensor value/-s.

The sensor 310 is integrated in the cookware 330, kitchen appliance 320 and/ or oven or other similar kitchen resource.

In some embodiments, the sensor 310 may comprise a humidity sensor situated on the surface of the oven for example in some embodiments, alerting the user via an alerting signal generated by the control unit 110 when a humidity exceeding a threshold value is exceed. In some embodiments, the control unit 110 may generate control signals for decreasing the heat of the stove 320.

The above discussed example is merely an example of sensor 310 and how it may be used. The sensor 310 may in some embodiments comprise a thermometer, configured to measure temperature in some embodiments. Such thermometer may comprise e.g. a thermistor, a resistive thermometer, an infrared thermometer, a resistance temperature detector, a heat flux sensor, a pyrometer, a bimetal thermometer, a silicon bandgap temperature sensor, etc., in combination with a wireless transmitter for transmitting the measurement value/-s.

Such temperature sensor 310 may be applied, besides the example above, for determining temperature of a frozen edible which is to be defrosted (which may be a recipe step); the temperature of an edible which is prepared in an oven, microwave oven, convection oven, a barbecue, etc.

However, the sensor 310 may alternatively, or in addition comprise a camera, a stereo camera, an infrared camera, a video camera or similar device, in different embodiments. Thus photos taken by the sensor 310 may be provided to the control unit 110. The control unit 110 may upon reception of the images in conjunction with an image recognition program be configured for image recognition/ computer vision and object recognition.

Computer vision is a technical field comprising methods for acquiring, processing, analysing, and understanding images and, in general, high-dimensional data from the real world in order to produce numerical or symbolic information. A theme in the development of this field has been to duplicate the abilities of human vision by electronically perceiving and understanding an image. Understanding in this context means the transformation of visual images (the input of retina) into descriptions of world that can interface with other thought processes and elicit appropriate action. This image understanding can be seen as the disentangling of symbolic information from image data using models constructed with the aid of geometry, physics, statistics, and learning theory. Computer vision may also be described as the enterprise of automating and integrating a wide range of processes and representations for vision perception.

The image data of the sensor 310 may take many forms, such as e.g. images, video sequences, views from multiple sensors 310, etc. As already mentioned, the sensor 310 in form of a camera may be comprised in the user's communication device 150 in some embodiments.

Computer vision may comprise e.g. scene reconstruction, event detection, video tracking, object recognition, object pose estimation, learning, indexing, motion estimation, and image restoration, just to mention some examples.

According to some embodiments, the control unit 110 may determine that a dish is ready, based on an image captured of the dish, e.g. by analysing the colour of the edible and comparing it with a reference colour scheme, in some embodiments.

However, in other embodiments, the control unit 110 may determine that an ingredient, such as e.g. a vegetable, is improper or defect, based on an image of the ingredient, captured by the sensor 310, by applying the image recognition program and comparing the received image/-s with a set of reference images.

In case a defect ingredient is detected by the control unit 110, the control unit 110 may generate and transmit an alert to the user. Such alert may be outputted to the user's communication device 150 e.g., in form of a text message, a visual message, an audio message and/ or a tactile message in different embodiments.

The control unit 110 as an output control the action of a cooking device of the user, such as the oven, the stove, the micro-oven, the slow cooker, the rice cooker, etc., based on information received from the user concerning when the meal is to be ready. The control is further based on sensor values detected by the sensor 310, such as e.g. temperature of the food. In some embodiments, the sensor 310 may comprise an olfactory sensor, e.g. for determining if an edible is fresh or deteriorated. Based on this information, the control unit 110 may determine if the checked edible is appropriate for human consumption and, if not, trigger the user's communication device 150 to emit a warning to the user, for not using the edible.

In some embodiments, the sensor 310 may detect bacterial growth on an edible. When this information is received by the control unit 110, the control unit 110 may compare the detected bacterial growth with a bacterial growth threshold limit. In case the threshold limit is exceeded, the control unit 110 may trigger an alert by the user's communication device 150 that may warn the user from utilising the edible in question.

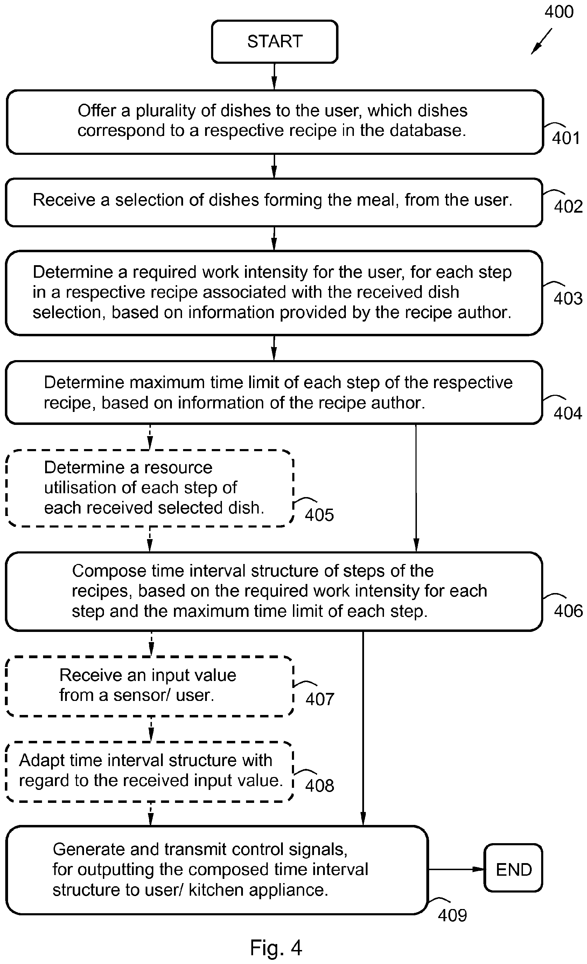

**Figure 4** is a flow chart illustrating embodiments of a method **400** in a control unit 110 for assisting a user in orchestrating preparation of a meal comprising a plurality of dishes, based on recipes 160, 170 stored in a database 120 on a common predetermined recipe format. The recipes 160, 170 may have been provided by independent, i.e. distinct recipe authors 130, 140, thanks to the predetermined common recipe format.

To appropriately assist the user in meal preparation, the method 400 may comprise a number of actions **401-409.** It is however to be noted that any, some or all of the described actions 401-409, may be performed in a somewhat different chronological order than the enumeration indicates. At least some of the actions 401-409 may be performed simultaneously or even be performed in an at least partly reversed order according to different embodiments. Further, it is to be noted that some actions may be performed only in some alternative embodiments, such as e.g. actions 405, and 407-408.

**Action 401** comprises offering a plurality of dishes to the user via a communication device 150, which dishes correspond to a respective recipe 160, 170 in the database 120.

The dishes may be outputted to the user e.g. in form of images/ video sequences of the readymade dishes and/ or a descriptive text of the dish. An audio voice presentation of the dishes is another option; or a combination of images, video, text and/ or audio presentation.

**Action 402** comprises receiving a selection of dishes forming the meal, selected by the user.

The user selection of dishes forming the meal the user will prepare may in some embodiments be received over a touch-free communication interface of the user's communication device 150. Such touch-free communication interface may comprise movement detection and recognition based on camera images captured by the user's communication device 150 of the user. In other embodiments, the touch-free communication interface may be based on voice recognition of audio signals captured by a microphone in the user's communication device 150.

**Action 403** comprises determining a required work intensity for/ from the user, for each step in a respective recipe 160, 170 associated with the received 402 dish selection, based on information provided by the recipe author 130, 140.

The recipe author 130, 140 may be forced to specify required work intensity for/ from the user for each recipe step, in some embodiments, according to the predetermined common recipe format, when uploading/ storing the recipe 160, 170 in the database 120.

Information concerning required work intensity for/ from the user, as determined by the recipe author 130, 140, may thus be stored in the database 120, associated with each recipe step.

**Action 404** comprises determining a maximum time limit of each step of the respective recipe 160, 170, based on information provided by the recipe author 130, 140, according to the common recipe format.

The recipe author 130, 140 may be forced to specify the maximum time limit of each recipe step by the predetermined common recipe format, when uploading the recipe 160, 170 to the database 120. Thereby, thanks to the common recipe format, and by enforcing the recipe authors 130, 140 to adapt their recipes 160, 170 to the common recipe format, it becomes possible to combine recipe steps of different recipes of different recipe authors 130, 140 into the meal.

Also, a minimum time limit of each recipe step of the respective recipe 160, 170, is determined, based on information provided by the recipe author 130, 140. Thereby, a time window is defined for each recipe step, defined by the minimum time limit and the maximum time limit of each recipe step, which time window defines a time period wherein the food prepared during the recipe step is optimal from a taste point of view.

**Action 405,** which may be performed only in some embodiments, comprises determining a resource utilisation of each recipe step of each received 402 selected dish.

The recipe author 130, 140 may be forced to specify the resource utilisation of each recipe step by the predetermined common recipe format, when uploading the recipe 160, 170 to the database 120.

**Action 406** comprises composing a time interval structure of the various steps of the respective recipes 160, 170, such as e.g. a working order of the recipe steps of the respective recipes 160, 170, based on the determined 403 required work intensity for/ from the user for each recipe step and the determined 404 maximum time limit of each recipe step.

The time interval structure, such as e.g. an aggregated working order, may also in some embodiments specify a time interval comprising a maximum time limit and possibly also a minimum time limit within which each respective recipe step is to be performed.

The time interval structure/ working order may be composed in order to optimise the meal preparation. By avoiding that food is deteriorated according to the method 400, it is ensured that the meal will be as tasty as possible.

The time interval structure/ working order may be composed in order to avoid a conflict in resource utilisation between steps of the recipes 160, 170, in some embodiments.

Further, the time interval structure/ working order may be composed in order to make the total preparation time of the meal as short as possible in some embodiments. In addition, the time interval structure/ working order may be composed in order to get all the dishes ready at the same time, within a time interval, in some embodiments.

**Action 407,** which may be performed only in some embodiments, may comprise receiving at least one input value, either from a sensor 310 situated in a kitchen resource, or from the communication device 150 of the user.

The input value may be e.g. a sensor signal received from a sensor 310. The sensor 310 may be situated in the kitchen or other similar location of the user. The sensor 310 may be e.g. a temperature sensor, an image sensor, etc., in different embodiments. The sensor 310 is integrated into a cookware 330, kitchen appliance 320 or other kitchen resource of the user; or in the user's communication device 150, etc.

However, in some embodiments, the input value may be inputted by the user, e.g., upon encouragement of the control unit 110, for example when a recipe step is terminated or started. The control unit 110 may then activate a time measuring functionality and keep track of the time spent by the user on each recipe step. Thereby, the control unit 110 may predict when the user is approaching the maximum time limit, such as e.g. when it is five minutes' left in a non-limiting example. The user may thereby be encouraged by the control unit 110 to speed up in order to avoid food deterioration, in some embodiments.

The input value may comprise e.g. a request to stall the food preparation process, e.g. due to a telephone call or other not foreseen event that suddenly occurs while cooking, in some embodiments, which in turn may trigger an adaptation of the time interval structure according to step 408.

The user may then stop the process, e.g. by a signal transmitted on the user's communication device 150.

**Action 408,** which may be performed only in some embodiments, may comprise adapting the time interval structure of the recipe steps with regard to the received 407 input value.

The adaptation of the time interval structure of the recipe steps may comprise changing an intended time interval of a recipe step, and/ or order of recipe steps, etc., however, without exceeding the maximum time limit.

The adaptation of the time interval structure of the recipe steps may further comprise changing (decreasing) heating temperature of a dish situated in a kitchen appliance 320 and/ or a cookware 330, in order to prolong the cooking time, e.g. when information has been received 407 that the user has been stalled by an incoming phone call or other unplanned event.

Thus the time interval structure may be dynamically adjusted to the reality, the capacity of the user and possible occurring interruptions. By not locking the time interval structure to the initially planned time interval structure, the user is helped to handle the cooking, also in a chaotic situation where the user is interrupted by various occurrences.

**Action 409** comprises generating and transmitting control signals to the communication device 150 of the user, for outputting the composed 406 time interval structure of the recipe steps, such as e.g. an aggregated working order.

The generated and transmitted 409 control signals to the communication device 150 of the user, or to a kitchen appliance 320 of the user, comprises information concerning the adapted 408 time interval structure.

The composed 406 time interval structure/ working order may then be outputted by the communication device 150 of the user by presenting e.g. a text message, an image message, an audio message comprising voice reading, a projection, an augmented reality image, or a combination thereof in some embodiments.

Further, the presentation may be outputted on the user's communication device 150, or possibly in another presentational device situated in the user's kitchen, or a combination thereof.

In some embodiments, a monitoring of the preparation time of each respective recipe step may be performed continuously by the control unit 110, and a comparison with the maximum time limit of each recipe step may be made. When the maximum time limit is exceeded, or when the maximum time limit is approached, an alert may be generated and sent to the user, encouraging him/ her to speed up and terminate the recipe step. Thereby waste or deterioration of food may be avoided.

In embodiments wherein the control unit 110 has received 407 an input value from the user, such as e.g. a sensor signal from a sensor 310 associated with the user, the generation and transmission of control signals to the communication device 150 of the user may concern a step of the composed 406 time interval structure of the steps, when the received 407 input value exceeds a threshold limit, associated with the step.

Some examples may be e.g. a warning signal or voice message when a pan 330 on a stove 320 is about to become too hot. In some embodiments, control signals may instead be sent to the kitchen appliance/ stove 320 to adjust the temperature. Some other examples may comprise sending control signals to the communication device 150 of the user to output a warning signal or voice message when it is time to take out a gratin from the oven; or an encouragement to the user to speed up, as an edible in a certain step of the process is about to deteriorate.

The sensor 310 may be e.g. a temperature sensor, an image sensor, etc. in different embodiments. The sensor 310 may be integrated into a cookware 330, kitchen appliance 320 or other kitchen resource of the user, in the user's communication device 150, etc.

In some embodiments, e.g. during a particular severe part of a recipe 160, 170, the generated and transmitted control signals may comprise instructions for the user's communication device 150 to output more detailed instructions, thereby guiding the user through at least a subset of the composed time interval structure of the steps. The outputted information may be e.g. a voice message, a film sequence, an image, a cartoon, a sequence of text messages and images, and/ or an augmented reality image stream, etc.

Furthermore, in some embodiments, the outputted information of the communication device 150 of the user may be an alert or an encouragement to the user to discontinue the recipe step and/ or check if the step/ edible/ dish is ready. The information may be outputted via the user's communication device 150, e.g. on the display as a visual message such as a text message, as an audio message such as voice reading or a signal, as a tactile signal, etc., or a combination thereof.

The control unit 110 is configured to generate and transmit command signals for discontinuing a recipe step, e.g. by adjusting temperature of the kitchen appliance 320, such as a stove, oven, microwave oven, rice cooker, hot pot, etc., without further interaction of the user.

In some alternative embodiments of the method 400, the control unit 110 may keep track of each recipe step of the user, e.g. by requesting the user to continuously confirm when starting each recipe step. This may be made continuously through any or all of the recipes 160, 170, or only through a subset of the recipes 160, 170, such as e.g. a subset which is in particular severe.

Further, the control unit 110 may compare the time spent on the currently performed recipe step with the maximum time limit associated with the recipe step. When the measured time the user has spent on the recipe step is approaching the maximum time limit, such as e.g. 70%, 80%, 90%, etc., of the maximum time limit. Thereby, the user is alerted when the maximum time limit of a recipe step or resting time of a ready dish is approaching and he/ she may speed up the procedure for avoiding that food becomes deteriorated.

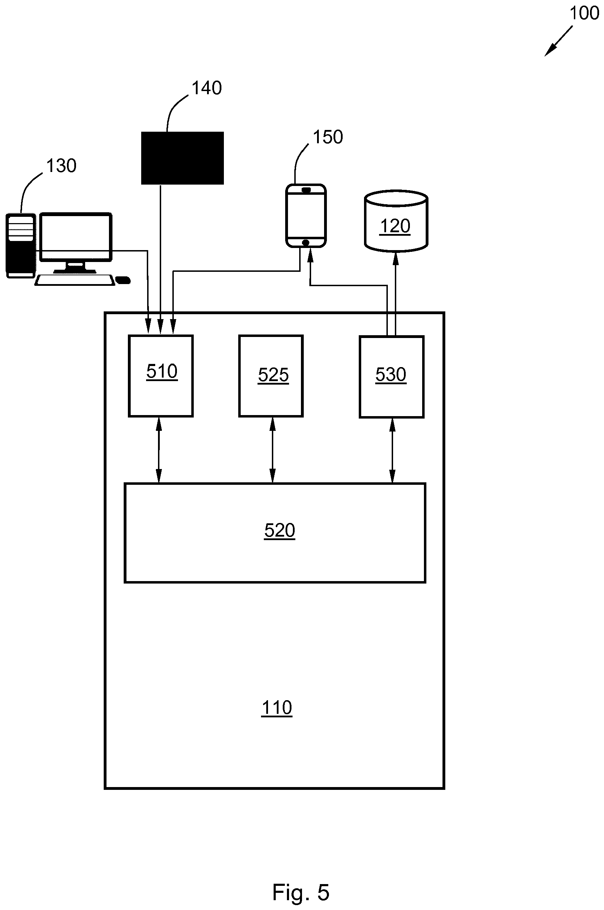

**Figure 5** depicts an embodiment of a system 100 for assisting a user in orchestrating preparation of a meal comprising a plurality of dishes. The system 100 comprises a control unit 110, configured to perform at least some of the described actions 401-409 of the method 400 for assisting a user in orchestrating preparation of a meal comprising a plurality of dishes, based on recipes 160, 170 stored in a database 120 on a common recipe format, by independent recipe authors 130, 140.

The control unit 110 is configured to offer a plurality of dishes to the user via a communication device 150, which dishes correspond to a respective recipe 160, 170 in the database 120. Further the control unit 110 is configured to receive a selection of dishes forming the meal, selected by the user, via a communication interface. In addition, the control unit 110 is also configured to determine a required work intensity of the user, for each step in a respective recipe 160, 170 associated with the received dish selection, based on information provided by the recipe author 130, 140 according to the common recipe format. The control unit 110 is furthermore configured to determine a maximum time limit and, also a minimum time limit of each step of the respective recipe 160, 170, based on information provided by the recipe author 130, 140. The control unit 110 is also configured to compose a time interval structure/ working order of the recipe steps of the respective recipes 160, 170, based on the determined required work intensity of the user for each step and the determined maximum time limit and minimum time limit of each recipe step. The control unit 110 is configured to generate and transmit control signals to the communication device 150 of the user, to output the composed time interval structure/ working order to the communication device 150 of the user.

In some embodiments, the control unit 110 may further be configured to determine a resource utilisation of each recipe step of each received selected dish, based on information provided by the recipe author 130, 140. The resource may be a cookware 330, a kitchen appliance 320, a domestic appliance, a kitchen utensil, etc. Further the control unit 110 may be configured to compose the time interval structure/ working order, in order to avoid a conflict in resource utilisation between steps of the respective recipes 160, 170, based on the determined resource utilisation of each respective recipe step, in some embodiments.

The control unit 110 may be configured to generate control signals to output the composed time interval structure/ working order to the user by voice reading in some embodiments.

Further, the control unit 110 is configured to receive at least one input value associated with the user. The input value is either a sensor value from a sensor 310 situated in a kitchen resource, or from the communication device 150 of the user. The control unit 110 may also be configured to generate control signals to output information to the user concerning a recipe step of the composed time interval structure/ working order when the received input value, such as e.g. sensor value, exceeds a threshold limit, associated with the recipe step.

The control unit 110 may in addition also be configured to adapt the time interval structure of the steps with regard to the received input value. Further the control unit 110 may be configured to generate and transmit control signals to the communication device 150 of the user, or to a kitchen appliance 320 of the user, may comprise information concerning the adapted time interval structure, in some embodiments.

In some alternative embodiments, the control unit 110 may be configured to receive the user selection of dishes forming the meal is received over a touch-free communication interface of the user's communication device 150.

The system 100 also comprises a database 120 comprising recipes 160, 170, entered on a common recipe format by independent recipe authors 130, 140, specifying a required work intensity for/ from the user, for each step in a respective recipe 160, 170, and a maximum time limit and, in some embodiments, also a minimum time limit of each step of the respective recipe 160, 170.

The database 120 may comprise a Database Management System (DBMS), i.e. a computer software application that interacts with the user, other applications, and the database 120 itself to capture and analyse data. A general-purpose DBMS is designed to allow the definition, creation, querying, update, and administration of databases. Some arbitrary examples of DBMSs may comprise e.g. MySQL, PostgreSQL, Microsoft SQL Server, Oracle, Sybase, SAP HANA, and/ or IBM DB2.

Further, the system 100 also comprises a communication device 150, of the user. The communication device 150 may typically comprise a mobile cellular telephone, or similar device. The communication device 150 may be arranged, in some embodiments, for touch-free communication with the user.

Also, the system 100 further comprises a sensor 310 situated in the user's kitchen or other corresponding location of the user. The sensor 310 may comprise e.g. a temperature sensor, a camera, a video camera, an infrared camera etc. The sensor 310 may be integrated in a kitchen appliance 320, or a kitchenware 330 in some embodiments.

The above-described control unit 110, as illustrated in Figure 5 may according to some embodiments comprise a receiving circuit **510** configured for receiving uploaded recipes 160, 170 from recipe authors 130, 140. Further, the receiving circuit 510 is configured to receive signals from the user's communication device 150, e.g. a selection of dishes made by the user. The receiving circuit 510 may be configured to receive signals over a wired and/ or wireless communication interface.

Further, the control unit 110 may according to some embodiments comprise a processor **520** for performing various computations, required for performing the method 400 according to at least some of the previously described steps 401-409. Such processor 520 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The here utilised expression "processor" may thus represent a processing circuitry comprising a plurality of processing circuits, such as, e.g., any, some or all of the ones enumerated above.

Furthermore, the control unit 110 may comprise a memory **525** in some embodiments. The optional memory 525 may comprise a physical device utilised to store data or programs, i.e., sequences of instructions, on a temporary or permanent basis. According to some embodiments, the memory 525 may comprise integrated circuits comprising silicon-based transistors. The memory 525 may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

Further, the control unit 110 may comprise a transmitting circuit **530** in some embodiments. The transmitting circuit 530 may be configured for transmitting a signal to e.g. the database 120, the user's communication device 150 and possibly other devices associated with the user and/ or the user's equipment. The transmitting circuit 530 may be configured to transmit signals over a wired and/ or wireless communication interface.

The previously described actions 401-409 to be performed by the control unit 110 may be implemented through the one or more processors 520 within the control unit 110, together with a computer program for performing at least some of the functions of the actions 401-409. Thus, a computer program, comprising instructions for performing the actions 401-409 in the control unit 110 may perform the method 400 according to at least some of the actions 401-409, when the computer program is loaded into the one or more processors 520 of the control unit 110.

The computer program mentioned above may be provided for instance in the form of a tangible data carrier carrying computer program code for performing at least some of the actions 401-409 according to some embodiments when being loaded into the one or more processors of the control unit 110. The data carrier may be, e.g., a hard disk, a CD ROM disc, a memory stick, an optical storage device, a magnetic storage device or any other appropriate medium such as a disk or tape that may hold machine readable data in a non-transitory manner. The computer program may furthermore be provided as computer program code on a server and downloaded to the control unit 110 remotely, e.g., over an Internet or an intranet connection.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures are recited in mutually different dependent claims does not indicate that a combination of these measures cannot be used to advantage. A computer program may be stored/ distributed on a suitable medium, such as an optical storage medium or a solid-state medium supplied together with or as part of other hardware, but may also be distributed in other forms such as via Internet or other wired or wireless communication system.

## Claims

1. A control unit (110) for assisting a user in orchestrating preparation of a meal comprising a plurality of dishes, based on recipes (160, 170) stored in a database (120) on a common recipe format, by independent recipe authors (130, 140), wherein the control unit (110) is configured to:
offer a plurality of dishes to the user via a communication device (150), which dishes correspond to a respective recipe (160, 170) in the database (120);
receive a selection of dishes forming the meal, selected by the user, via a communication interface;
determine a required work intensity of the user, selected from at least three distinct work intensity levels, for each cooking step in a respective recipe (160, 170) associated with the received dish selection, based on information provided by the recipe author (130, 140);
determine a maximum time limit, and a minimum time limit, of each step of the respective recipes (160, 170), based on information provided by the recipe author (130, 140);
compose a time interval structure of the steps of the respective recipes (160, 170), based on the determined required work intensity of the user for each step and the determined maximum and minimum time limits, respectively, of each step;
receive at least one input value, either from a sensor (310) situated in a kitchen resource or from the communication device (150) of the user;
adapt the time interval structure of the recipe steps with regard to the received input value; and
generate and transmit control signals to the communication device (150) of the user, or to a kitchen appliance (320) of the user for outputting the adapted time interval structure on the communication device (150) or on the kitchen appliance (320); and
as an output, control the action of the kitchen appliance (320) of the user, based on information received from the user concerning when the meal is to be ready and further based on sensor values detected by the sensor (310).

2. The control unit (110) according to claim 1, further configured to:
determine a resource utilisation of each step of each received selected dish, based on information provided by the recipe author (130, 140); and
compose the time interval structure of the steps, in order to avoid a conflict in resource utilisation between steps of the respective recipes (160, 170), based on the determined resource utilisation of each respective step.

3. The control unit (110) according to any of claim 1 or claim 2, further configured to:
generate and emit a warning to the user's communication device (150) when the maximum time limit of the particular recipe step is approached, reached or exceeded.

4. The control unit (110) according to any of the claims 1-3, further configured to:
receive at least one input signal from the user to confirm the start or termination of a recipe step; or a request to stall the food preparation process.

5. A method (400) in a control unit (110) for assisting a user in orchestrating preparation of a meal comprising a plurality of dishes, based on recipes (160, 170) stored in a database (120) on a common recipe format, by independent recipe authors (130, 140); which method (400) comprises:
offering (401) a plurality of dishes to the user via a communication device (150), which dishes correspond to a respective recipe (160, 170) in the database (120);
receiving (402) a selection of dishes forming the meal, selected by the user;
determining (403) a required work intensity of the user, selected from at least three distinct work intensity levels, for each step in a respective recipe (160, 170) associated with the received (402) dish selection, based on information provided by the recipe author (130, 140);
determining (404) a maximum time limit, and a minimum time limit, of each step of the respective recipe (160, 170), based on information provided by the recipe author (130, 140);
composing (406) a time interval structure of the various steps of the respective recipes (160, 170), based on the determined (403) required work intensity of the user for each step and the determined (404) maximum time and minimum time limits, respectively, of each step;
receiving (407) at least one input value, either from a sensor (310) situated in a kitchen resource, or from the communication device (150) of the user;
adapting (408) the time interval structure of the recipe steps with regard to the received (407) input value;
generating and transmitting (409) control signals to the communication device (150), or to a kitchen appliance (320) of the user, for outputting the adapted (408) time interval structure on the communication device (150) or on the kitchen appliance (320); and
outputting control of the kitchen appliance (320) of the user, based on information received from the user concerning when the meal is to be ready and further based on sensor values detected by the sensor (310).

6. The method (400) according to claim 5, further comprising:
determining (405) a resource utilisation of each step of each received (402) selected dish; and
wherein the time interval structure of the steps is composed (406) in order to avoid a conflict in resource utilisation between steps of the recipes (160, 170).

7. The method (400) according to any of claim 5 or claim 6, further comprising:
generating and emit a warning to the user's communication device (150) when the maximum time limit of the particular recipe step is approached, reached or exceeded.

8. The method (400) according to any of the claims 5-7, further comprising:
receiving (407) at least one input value from the user to confirm that a recipe step is terminated or started; or a request to stall the food preparation process.

9. A computer program comprising program code for performing a method (400) according to any of claims 5-8 when the computer program is executed in the control unit (110), according to any of claims 1-4.

10. A system (100) for assisting a user in orchestrating preparation of a meal comprising a plurality of dishes, which system (100) comprises:
a control unit (110), according to any of claims 1-4;
a database (120) comprising recipes (160, 170), entered on a common recipe format by independent recipe authors (130, 140), specifying a required work intensity of the user, for each step in a respective recipe (160, 170), and a maximum time limit of each step of the respective recipe (160, 170); and
a communication device (150) configured for user operation over a touch free communication interface.

## Patentansprüche

1. Eine Steuereinheit (110) zur Unterstützung eines Benutzers bei der Orchestrierung der Zubereitung einer Mahlzeit, die eine Vielzahl von Gerichten umfasst, basierend auf Rezepten (160, 170), die in einer Datenbank (120) in einem gemeinsamen Rezeptformat von unabhängigen Rezeptautoren (130, 140) gespeichert sind, wobei die Steuereinheit (110) so konfiguriert ist, dass sie:
dem Benutzer eine Vielzahl von Gerichten über ein Kommunikationsgerät (150) anbietet, wobei die Gerichte einem entsprechenden Rezept (160, 170) in der Datenbank (120) entsprechen;
eine Auswahl von Gerichten, die die Mahlzeit bilden, über eine Kommunikationsschnittstelle vom Benutzer erhält;
eine erforderliche Arbeitsintensität des Benutzers für jeden Kochschritt in einem jeweiligen Rezept (160 170), das mit der erhaltenen Gerichtsauswahl verbunden ist, auf der Grundlage der vom Rezeptautor (130 140) bereitgestellten Informationen aus mindestens drei verschiedenen Arbeitsintensitätsstufen ermittelt;
ein maximales Zeitlimit und ein minimales Zeitlimit für jeden Schritt der jeweiligen Rezepte (160 170) basierend auf den vom Rezeptautor (130 140) bereitgestellten Informationen bestimmt;
eine Zeitintervallstruktur der Schritte der jeweiligen Rezepte (160 170) basierend auf der ermittelten erforderlichen Arbeitsintensität des Benutzers für jeden Schritt und den ermittelten maximalen und minimalen Zeitlimits der jeweiligen Schritte zusammenstellt;
mindestens einen Eingabewert entweder von einem Sensor (310), der sich in einer Küchenressource befindet, oder vom Kommunikationsgerät (150) des Benutzers empfängt;
die Zeitintervallstruktur der Rezeptschritte in Bezug auf den empfangenen Eingabewert anpasst; und
Erzeugen und Senden von Steuersignalen an das Kommunikationsgerät (150) des Benutzers oder an das Küchengerät (320) des Benutzers, um die angepasste Zeitintervallstruktur auf dem Kommunikationsgerät (150) oder auf dem Küchengerät (320) auszugeben; und
als Ausgabe die Aktion des Küchengeräts (320) des Benutzers basierend auf Informationen steuert, die vom Benutzer darüber erhalten werden, wann die Mahlzeit fertig sein soll, und weiter basierend auf von dem Sensor (310) erfassten Sensordaten.

2. Die Steuereinheit (110) nach Anspruch 1, die weiter so konfiguriert ist, dass sie:
eine Ressourcennutzung für jeden Schritt des jeweiligen ausgewählten Gerichts auf der Grundlage der vom Rezeptautor (130 140) bereitgestellten Informationen ermittelt; und
die Zeitintervallstruktur der Schritte so zusammenstellt, dass ein Konflikt in der Ressourcennutzung zwischen den Schritten der jeweiligen Rezepte (160, 170) basierend auf der ermittelten Ressourcennutzung der jeweiligen Schritte vermieden wird.

3. Die Steuereinheit (110) nach einem der Ansprüche 1 oder 2, die weiter so konfiguriert ist, dass sie:
eine Warnung an das Kommunikationsgerät (150) des Benutzers erzeugen und senden, wenn das maximale Zeitlimit des jeweiligen Rezeptschritts fast erreicht wird, erreicht oder überschritten.

4. Die Steuereinheit (110) nach einem der Ansprüche 1-3, die weiter so konfiguriert ist, dass sie:
mindestens ein Eingabesignal vom Benutzer erhält, um den Start oder das Ende eines Rezeptschritts zu bestätigen oder eine Anforderung zum Anhalten des Essensvorbereitungsprozesses zu empfangen.

5. Ein Verfahren (400) in einer Steuereinheit (110) zur Unterstützung eines Benutzers bei der Orchestrierung der Zubereitung einer Mahlzeit, die eine Vielzahl von Gerichten umfasst, basierend auf Rezepten (160 170), die in einer Datenbank (120) in einem gemeinsamen Rezeptformat von unabhängigen Rezeptautoren (130, 140) gespeichert sind; wobei das Verfahren (400) umfasst:
dem Benutzer (401) eine Vielzahl von Gerichten über ein Kommunikationsgerät (150) anzubieten, wobei die Gerichte einem entsprechenden Rezept (160 170) in der Datenbank (120) entsprechen;
eine Auswahl (402) von Gerichten, die die Mahlzeit bilden, vom Benutzer zu empfangen;
eine erforderliche Arbeitsintensität (403) des Benutzers für jeden Schritt in einem jeweiligen Rezept (160 170), das mit der erhaltenen (402) Gerichtsauswahl verbunden ist, basierend auf den vom Rezeptautor (130 140) bereitgestellten Informationen aus mindestens drei verschiedenen Arbeitsintensitätsstufen zu ermitteln;
ein maximales Zeitlimit und ein minimales Zeitlimit (404) für jeden Schritt des jeweiligen Rezepts (160 170) basierend auf den vom Rezeptautor (130 140) bereitgestellten Informationen zu bestimmen;
eine Zeitintervallstruktur (406) der verschiedenen Schritte der jeweiligen Rezepte (160, 170) basierend auf der ermittelten (403) erforderlichen Arbeitsintensität des Benutzers für jeden Schritt und den bestimmten (404) maximalen und minimalen Zeitlimits der jeweiligen Schritte zusammenzustellen;
mindestens einen Eingabewert (407) entweder von einem Sensor (310), der sich in einer Küchenressource befindet, oder vom Kommunikationsgerät (150) des Benutzers zu empfangen;
die Zeitintervallstruktur (408) der Rezeptschritte in Bezug auf den empfangenen (407) Eingabewert anzupassen;
Erzeugen und Senden (409) von Steuersignalen an das Kommunikationsgerät (150) des Benutzers oder an das Küchengerät (320) des Benutzers, um die angepasste (408) Zeitintervallstruktur auf dem Kommunikationsgerät (150) oder auf dem Küchengerät (320) auszugeben; und
die Steuerung des Küchengeräts (320) des Benutzers auf der Grundlage von Informationen, die vom Benutzer darüber erhalten werden, wann die Mahlzeit fertig sein soll, und weiter basierend auf Sensordaten, die vom Sensor (310) erfasst wurden, auszugeben.

6. Das Verfahren (400) nach Anspruch 5, umfasst weiterhin:
eine Ressourcennutzung (405) für jeden Schritt des jeweiligen ausgewählten Gerichts zu ermitteln (402); und
wobei die Zeitintervallstruktur der Schritte (406) so zusammengesetzt wird, dass ein Konflikt in der Ressourcennutzung zwischen den Schritten der Rezepte (160, 170) vermieden wird.

7. Das Verfahren (400) nach einem der Ansprüche 5 oder Ansprüche 6, umfasst weiterhin:
eine Warnung an das Kommunikationsgerät (150) des Benutzers erzeugen und senden, wenn das maximale Zeitlimit des jeweiligen Rezeptschritts fast erreicht wird, erreicht oder überschritten.

8. Das Verfahren (400) nach einem der Ansprüche 5-7, umfasst weiterhin:
mindestens einen Eingabewert (407) vom Benutzer zu empfangen, um zu bestätigen, dass ein Rezeptschritt beendet oder gestartet wurde, oder eine Anforderung zum Anhalten des Essensvorbereitungsprozesses zu empfangen.

9. Ein Computerprogramm, das Programmcode zum Ausführen eines Verfahrens (400) gemäß einem der Ansprüche 5-8 enthält, wenn das Computerprogramm in der Steuereinheit (110) gemäß einem der Ansprüche 1-4 ausgeführt wird.

10. Ein System (100) zur Unterstützung eines Benutzers bei der Orchestrierung der Zubereitung einer Mahlzeit, die eine Vielzahl von Gerichten umfasst, wobei das System (100) umfasst:
eine Steuereinheit (110) gemäß einem der Ansprüche 1-4;
eine Datenbank (120), die Rezepte (160, 170) enthält, die in einem gemeinsamen Rezeptformat von unabhängigen Rezeptautoren (130, 140) eingegeben wurden in der eine erforderliche Arbeitsintensität des Benutzers für jeden Schritt in einem jeweiligen Rezept (160, 170) sowie ein maximales Zeitlimit für jeden Schritt des jeweiligen Rezepts (160, 170) spezifiziert wird; und
ein Kommunikationsgerät (150), das für den Benutzerbetrieb über eine berührungsfreie Kommunikationsschnittstelle konfiguriert ist.

## Revendications

1. Une unité de contrôle (110) pour aider un utilisateur à orchestrer la préparation d'un repas comprenant une pluralité de plats basés sur des recettes (160 170) stockées dans une base de données (120) dans un format de recette commun par des auteurs de recettes indépendants (130, 140), l'unité de contrôle (110) étant configurée pour:
offrir une pluralité de plats à l'utilisateur via un dispositif de communication (150), ces plats correspondant à une recette respective (160, 170) dans la base de données (120) ;
recevoir une sélection de plats composant le repas choisi par l'utilisateur via une interface de communication;
déterminer une intensité de travail requise de l'utilisateur sélectionnée parmi au moins trois niveaux distincts d'intensité de travail pour chaque étape de cuisson dans une recette respective (160, 170) associée à la sélection de plats reçue, sur la base des informations fournies par l'auteur de la recette (130, 140);
déterminer une limite de temps maximale et une limite de temps minimale pour chaque étape des recettes respectives (160, 170) en se basant sur les informations fournies par l'auteur de la recette (130, 140);
composer une structure d'intervalle de temps des étapes des recettes respectives (160, 170) en fonction de l'intensité de travail requise déterminée de l'utilisateur pour chaque étape et des limites de temps maximales et minimales déterminées respectivement pour chaque étape;
recevoir au moins une valeur d'entrée soit d'un capteur (310) situé dans une ressource de cuisine ou du dispositif de communication (150) de l'utilisateur;
adapter la structure d'intervalle de temps des étapes de la recette en fonction de la valeur d'entrée reçue; et
générer et transmettre des signaux de commandes au dispositif de communication (150) de l'utilisateur ou à un appareil de cuisine (320) de l'utilisateur pour afficher la structure d'intervalle de temps adaptée sur le dispositif de communication (150) ou sur l'appareil de cuisine (320); et
en sortie, contrôler l'action de l'appareil de cuisine (320) de l'utilisateur sur la base des informations reçues de l'utilisateur concernant le moment où le repas doit être prêt et en se basant également sur les valeurs de capteur détectées par le capteur (310).

2. L'unité de contrôle (110) selon la revendication 1, en outre configurée pour :
déterminer une utilisation des ressources pour chaque étape de chaque plat sélectionné reçu en fonction des informations fournies par l'auteur de la recette (130, 140); et
composer la structure d'intervalle de temps des étapes afin d'éviter un conflit d'utilisation des ressources entre les étapes des recettes respectives (160, 170) en fonction de l'utilisation des ressources déterminée pour chaque étape respective.

3. L'unité de contrôle (110) selon l'une des revendications 1 ou 2, en outre configurée pour:
générer et émettre un avertissement sur le dispositif de communication (150) de l'utilisateur lorsque la limite de temps maximale de l'étape de la recette particulière est approchée, atteinte ou dépassée.

4. L'unité de contrôle (110) selon l'une des revendications 1-3, en outre configurée pour:
recevoir au moins un signal d'entrée de l'utilisateur pour confirmer le début ou la fin d'une étape de recette; ou une demande de suspension du processus de préparation des aliments.

5. Un procédé (400) dans une unité de contrôle (110) pour aider un utilisateur à orchestrer la préparation d'un repas comprenant une pluralité de plats basés sur des recettes (160, 170) stockées dans une base de données (120) dans un format de recette commun par des auteurs de recettes indépendants (130, 140); ledit procédé (400) comprenant:
offrir (401) une pluralité de plats à l'utilisateur via un dispositif de communication (150), ces plats correspondant à une recette respective (160, 170) dans la base de données (120);
recevoir (402) une sélection de plats formant le repas choisi par l'utilisateur;
déterminer (403) une intensité de travail requise de l'utilisateur sélectionnée parmi au moins trois niveaux distincts d'intensité de travail pour chaque étape dans une recette respective (160, 170) associée à la sélection de plats reçue (402), sur la base des informations fournies par l'auteur de la recette (130, 140);
déterminer (404) une limite de temps maximale et une limite de temps minimale pour chaque étape de la recette respective (160, 170) en se basant sur les informations fournies par l'auteur de la recette (130, 140);
composer (406) une structure d'intervalle de temps des différentes étapes des recettes respectives (160 170) en fonction de l'intensité de travail requise déterminée (403) de l'utilisateur pour chaque étape et des limites de temps maximales et minimales déterminées (404) respectivement pour chaque étape;
recevoir (407) au moins une valeur d'entrée soit d'un capteur (310) situé dans une ressource de cuisine, soit du dispositif de communication (150) de l'utilisateur;
adapter (408) la structure d'intervalle de temps des étapes de la recette en fonction de la valeur d'entrée reçue (407);
générer et transmettre (409) des signaux de commande au dispositif de communication (150) ou à un appareil de cuisine (320) de l'utilisateur pour afficher la structure d'intervalle de temps adaptée (408) sur le dispositif de communication (150) ou sur l'appareil de cuisine (320); et
en sortie, contrôler l'appareil de cuisine (320) de l'utilisateur sur la base des informations reçues de l'utilisateur concernant le moment où le repas doit être prêt et en se basant également sur les valeurs de capteur détectées par le capteur (310).

6. Le procédé (400) selon la revendication 5, comprenant en outre:
déterminer (405) une utilisation des ressources pour chaque étape de chaque plat sélectionné reçu (402); et
où la structure d'intervalle de temps des étapes est composée (406) afin d'éviter un conflit d'utilisation des ressources entre les étapes des recettes (160, 170).

7. Le procédé (400) selon l'une des revendications 5 ou 6, comprenant en outre:
générer et émettre un avertissement sur le dispositif de communication (150) de l'utilisateur lorsque la limite de temps maximale de l'étape de la recette particulière est approchée, atteinte ou dépassée.

8. Le procédé (400) selon l'une des revendications 5-7, comprenant en outre:
recevoir (407) au moins une valeur d'entrée de l'utilisateur pour confirmer qu'une étape de la recette est terminée ou commencée; ou une demande de suspension du processus de préparation des aliments.

9. Un programme informatique comprenant un code de programme pour exécuter un procédé (400) selon l'une des revendications 5-8 lorsque le programme informatique est exécuté dans l'unité de contrôle (110) selon l'une des revendications 1-4.

10. Un système (100) pour aider un utilisateur à orchestrer la préparation d'un repas comprenant une pluralité de plats, le système (100) comprenant:
une unité de contrôle (110) selon l'une des revendications 1-4;
une base de données (120) comprenant des recettes (160, 170) saisies dans un format de recette commun par des auteurs de recettes indépendants (130, 140) spécifiant une intensité de travail requise de l'utilisateur pour chaque étape dans une recette respective (160, 170) et une limite de temps maximale pour chaque étape de la recette respective (160, 170); et
un dispositif de communication (150) configuré pour une utilisation par l'utilisateur via une interface de communication sans contact.
